# EUROPEAN PATENT APPLICATION

(11) **EP 2 219 274 A2**
(43) Date of publication of application: **18.08.2010**
(21) Application number: 10153376.8
(22) Date of filing: 11.02.2010
(51) Int. Cl.: H02B 1/28

(54) **Explosionproof electrical device**

(30) Priority: 16.02.2009 UA 2009001218
(71) Applicant: Limited Liability Company "Energogroup", 83001 Donetsk (UA)
(72) Inventor: Kuzhel, Sergiy, 85000, Donetska obl. (UA); Basov, Mikola, 86600, Donetska obl. (UA); Dzyuban, Vitaliy, 83001, m. Donetsk (UA)
(74) Representative: Browne, Robin Forsythe

(57) **Abstract**

The invention relates to electrical engineering, to explosionproof devices, which may be used in power supply, control and protection of electrical receivers working in explosive environments, for example, in mines and pits. The device comprises explosionproof input and instrumentation sections, a movable chassis on which components of the device are mounted, portions of quick-disconnect connectors which are electrically connected to said components, and feedthrough terminals of the input section that is located in the instrumentation section. In addition, another explosionproof section with located in it the other portions of said quick-disconnect connectors is incorporated, which are connected to said feedthrough terminals. The section is provided with a quick-open cover, the movable chassis is mechanically jointed with a handle of a drive dog, which is located outside of the enclosure and provides chassis movement until portions of quiclc-disconnect connectors are switched on and switched off with open cover of the additional section. In that case, said connectors serve as interlocking explosionproof disconnector. The invention provides design simplification; reduction of mass and overall dimensions of the device.

## Description

The present invention relates to electrical engineering, more particularly to explosionproof electrical devices, which are employed to control and protect electricity receivers operating in explosive environments, for example, in mines and pits.

Known from the state of the art are explosionproof starters which comprise explosionproof sections: an input section for connection to a power supply; an interlocking disconnector located within an explosionproof section thereof; an instrumentation section in which control and protection apparatuses and devices are located; and an output section for connection to electricity receivers (see the specification to USSR Inventor's Certificate No. 1610529, Int. Cl. 5 H02B13/00, H01H19/04, entitled "Explosionproof electrical device", Bulletin No. 44, 1990).

The components of the starter which are located in different sections are connected to each other electrically by means of feedthrough terminals arranged at explosionproof partitions which separate the sections from each other. Each section has its own cover and explosionproof flanges which provide access to the components located within the sections during both manufacture and operation of the starter.

The disadvantages of such a device include the complexity of its design; a significant number of partitions between the sections and of connection points of power circuit components, i.e., of heat sources; a complicated access to the components located within the sections, this complicating the installation and maintenance thereof.

Known from the state of the art is also a explosionproof cubicle switchboard which is similar to the device in accordance with the present invention in most essential features and comprises an explosionproof input and output sections; an explosionproof instrumentation section and two disconnectors located within explosionproof sections thereof and connected into a power circuit at the input and the output of the device, connected to a handle of its driving dog outside the enclosure, and interlocked with a door of the instrumentation section. In this section, control and protection apparatuses and devices are installed at a movable chassis and connected electrically to feedthrough terminals at the partitions of the input section and the output section by means of quick disconnect power connectors (V. S. Dzyuban, I. G. Shirnin, B. N. Vaneev, V. M. Gostishchev, Reference Book of a Coalmine Power Engineer, Donetsk, South-East, 2001, pp.602-623).

The disadvantages of such a device include the complexity of its design; a significant weight and significant dimensions which are explained by the necessity to house the disconnectors within the explosionproof sections thereof; the two groups of connectors which are an additional link between the disconnectors and the components installed at the movable chassis; the interlocking units which prohibit the opening of the door to the instrumentation section when the disconnectors are closed.

Accordingly, the object of the present invention is to simplify the design, to reduce the weight and dimensions, and to improve the reliability of the device.

In order to attain the object of the present invention, the prior art explosionproof device, which comprises the explosionproof input and instrumentation sections, a movable chassis at which components of the device, which are located within the instrumentation section, and portions of quick disconnect connectors are disposed, further comprises an additional explosionproof section in which there are disposed the other portions of said electrical connectors and the portions of the feedthrough terminals to which they are connected, said section comprising also a cover which may cover the section when the connectors are open, the movable chassis being connected mechanically to a handle of a driving dog thereof which is located at an outer side of the enclosure of the device and interlocked with a door of the instrumentation section so that the door may only be opened when said cover of the additional section is closed.

The features of the device in accordance with the present invention distinguished from the prototype thereof are requisite and sufficient in all of the events which are covered by the legal protection of the invention.

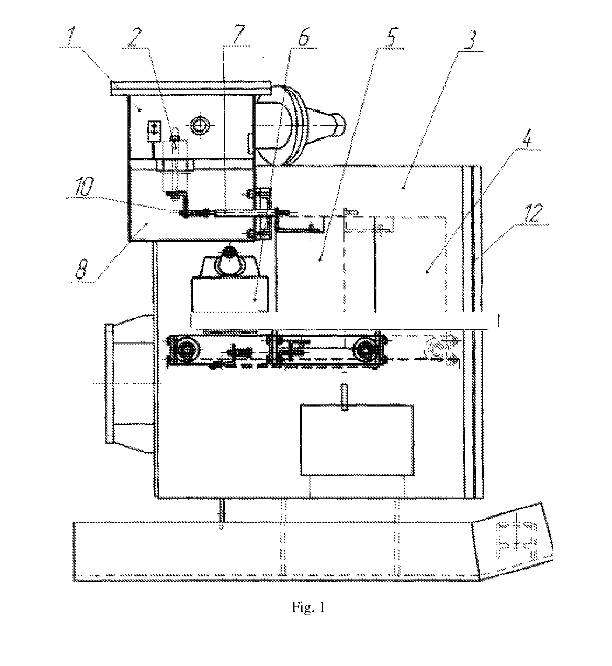

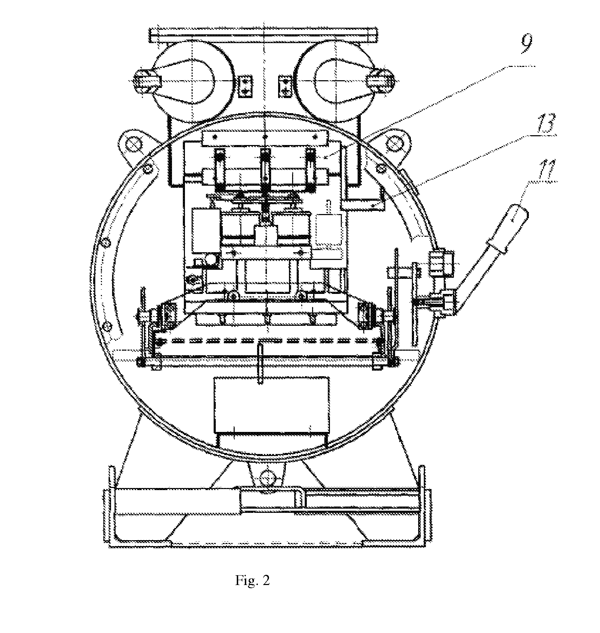

The device in accordance with the present invention is explained with reference to Fig. 1, Fig. 2, which show the design thereof.

Referring now to Fig. 1 and Fig. 2, the device in accordance with the present invention comprises a explosionproof input section 1 with feedthrough terminals 2, an instrumentation section 3 in which a movable chassis 4 with apparatuses and components installed thereat, for example, with a switch 5, a voltage transformer 6, *etc.* and portions of quick disconnect electrical connectors 7, a door 12 of the instrumentation section.

An explosionproof section 8 with a cover 9 is included additionally in the design in which there are disposed portions of the feedthrough terminals 2 and electrical connectors, for example, sockets 10 which are connected electrically to portions of the said feedthrough terminals 2. The movable chassis is connected mechanically to a handle 11, which is located at an outer side of the enclosure and with the aids whereof the movable chassis 4 may be moved within the instrumentation section. This instrumentation section 3 comprises the door 12; the cover 9 is connected mechanically to a lever 13 with the aids whereof the instrumentation section may be opened and closed.

### Operation of the Device

To bring the device in accordance with the present invention to its operation condition, the door 12 of the instrumentation section are closed and the cover 9 of the additional section is opened. The movable chassis 4 along with the switch 5 is then moved by means of the handle 11 till the closure of contacts 10 and 7 of the connector. In this condition, the switching on of the switch 5 results in voltage application to electricity receivers. Where access to the components which are installed within the instrumentation section 3 is required, the switch 5 is switched off, the movable chassis 4 is moved to the position in which contacts 10 and 7 are opened (shown by a dotted line), and the cover 9 is closed. This makes it possible to ensure explosion protection of the section 8 with the portions of contacts 10 and feedthrough terminals 2 to which voltage is applied. At the same time, no voltage is applied to all of the apparatuses and components in the instrumentation section and, therefore, the door 12 may be opened safely and access to said apparatuses and components may be provided.

The device in accordance with the present invention enables the functions of electrical connectors and disconnectors and those of the explosionproof sections thereof to be combined this making it possible to simplify the design, to reduce the weight and dimensions, and to improve the reliability of the device thanks to reduction in the quantity of contacts in power circuits and, therefore, of heat sources.

The drawings do not show the terminals of the device since these may be configured as in conventional designs or as in the device in accordance with the present invention as well.

## Claims

1. An explosionproof electrical device, comprising: an explosionproof input section; an explosionproof instrumentation section; a movable chassis at which there are installed components of the device, the portions of quick disconnect connectors connected electrically to said components, and feedthrough terminals of the input section which is located within the instrumentation section, **characterized in that** it further comprises an additional explosionproof section in which there are disposed the other portions of said electrical connectors and of said feedthrough terminals which are connected to each other, and the additional section comprising a cover which may cover the additional section when the connector contacts are open; the movable chassis being connected mechanically to a handle of a driving dog thereof which is located at an outer side of the enclosure of the device and interlocked with a door of the instrumentation section so that the door may be opened when the cover of the additional section is closed.
